(19) Europäisches Patentamt / European Patent Office / Office européen des brevets

(11) **EP 4 546 200 A1**

(12) **EUROPEAN PATENT APPLICATION**
published in accordance with Art. 153(4) EPC

(43) Date of publication:
**30.04.2025 Bulletin 2025/18**

(21) Application number: **23826360.2**

(22) Date of filing: **19.06.2023**

(51) International Patent Classification (IPC):
*G06F 30/17* (2020.01)

(52) Cooperative Patent Classification (CPC):
**G06F 30/17; G06F 30/27;** G06F 2111/10;
G06F 2113/08; G06F 2119/08

(86) International application number:
**PCT/CN2023/101130**

(87) International publication number:
**WO 2023/246712 (28.12.2023 Gazette 2023/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.06.2022 CN 202210713385**

(71) Applicant: **Beijing Co Wheels Technology Co., Ltd
Beijing 101300 (CN)**

(72) Inventors:
• **ZHANG, Hongyang
Beijing 101300 (CN)**

• **MENG, Ying
Beijing 101300 (CN)**
• **XUE, Jian
Beijing 101300 (CN)**
• **MA, Chunshan
Beijing 101300 (CN)**
• **LIU, Kaifeng
Beijing 101300 (CN)**
• **MENG, Yue
Beijing 101300 (CN)**
• **NING, Yunpeng
Beijing 101300 (CN)**

(74) Representative: **Maiwald GmbH
Elisenhof
Elisenstraße 3
80335 München (DE)**

(54) **LOCAL FLOW MODEL CONSTRUCTION METHOD, APPARATUS AND DEVICE, MEDIUM, AND VEHICLE**

(57) The present disclosure provides a local flow model construction method. The method comprises: on the basis of acquired first flow data of a thermal management system, obtaining a target physical model corresponding to the thermal management system; on the basis of the target physical model, calculating second flow data of a coolant at a target heat exchange component in the thermal management system; and according to the second flow data and a target feature parameter corresponding to the second flow data and controlling the operation of the thermal management system, training a preset model to obtain a local flow model used for determining the coolant at the target heat exchange component.

obtaining a target physical model corresponding to a thermal management system based on acquired first flow data of the thermal management system — Step 210

calculating second flow data of coolant at a target heat exchange component in the thermal management system based on the target physical model. — Step 220

obtaining a local flow model for the coolant at the target heat exchange component by training a preset model according to the second flow data and a target characteristic parameter for controlling operation of the thermal management system corresponding to the second flow data — Step 230

FIG. 2

# EP 4 546 200 A1

**Description**

## TECHNICAL FIELD

The present disclosure belongs to a field of thermal management technologies, and specifically to a method and an apparatus for constructing a local flow model, a device, a medium and a vehicle.

## BACKGROUND

A thermal management system of an automobile needs to automatically adjust a cooling intensity according to a driving condition and an environmental condition, to maintain corresponding components operating within an optimal temperature range, and particularly to maintain an engine operating within the corresponding optimal temperature range.

Temperature of coolant in the engine needs to be determined according to a flow of the coolant. When determining the flow of the coolant, it is currently predicted by an overall model of the thermal management system of the automobile. Such predicted flow of the coolant is an overall flow of the thermal management system, however, heat exchange components in the thermal management system of the automobile are complicated, a local flow of the coolant corresponding to each of the heat exchange components is different from the overall flow of the thermal management system of the automobile. If the overall flow of the thermal management system of the automobile replaces a local flow of the coolant corresponding to a certain heat exchange component in the thermal management system of the automobile, it is not accurate enough.

## SUMMARY

Embodiments of the present disclosure aim to provide a method and an apparatus for constructing a local flow model, a device, a medium and a vehicle, to achieve an effect of rapidly and accurately obtaining a local flow model of a thermal management system, and further obtaining an accurate local flow of coolant of the thermal management system.

In a first aspect, there is provided a method for constructing a local flow model. The method includes:

obtaining a target physical model corresponding to a thermal management system based on acquired first flow data of the thermal management system;

calculating second flow data of coolant at a target heat exchange component in the thermal management system based on the target physical model; and

obtaining a local flow model for the coolant at the target heat exchange component by training a preset model according to the second flow data and a target characteristic parameter for controlling operation of the thermal management system corresponding to the second flow data.

In a second aspect, there is provided an apparatus for constructing a local flow model. The apparatus includes:

a first construction module, configured to obtain a target physical model corresponding to a thermal management system based on acquired first flow data of the thermal management system;

a calculation module, configured to calculate second flow data of coolant at a target heat exchange component in the thermal management system based on the target physical model; and

a first determining module, configured to obtain a local flow model for the coolant at the target heat exchange component by training a preset model according to second flow data and a target characteristic parameter for controlling operation of the thermal management system corresponding to the second flow data.

In a third aspect, embodiments of the disclosure provide a device for constructing a local flow model is provided. The device includes a processor, a memory and a program or an instruction stored on the memory and executable by the processor, in which when the program or the instruction is executed by the processor, steps of the method for constructing the local flow model in any one embodiment of the disclosure are implemented.

In a fourth aspect, embodiments of the present disclosure provide a computer-readable storage medium storing a program or an instruction thereon, in which when the program or the instruction is executed by a processor, steps of the method for constructing the local flow model are implemented.

In a fifth aspect, embodiments of the present disclosure provide a vehicle. The vehicle includes at least one of:

the apparatus for constructing the local flow model according to the first aspect;

the device for constructing the local flow model according to the second aspect; or

the computer-readable storage medium according to the third aspect.

In a sixth aspect, embodiments of the present disclosure provide a computer program product including a computer program. When the computer program is executed by a processor, the method for constructing the local flow model in any one embodiment of the present disclosure is implemented.

The method and the apparatus for constructing the local flow model, the device, the medium and the vehicle according to embodiments of the disclosure, the target physical model corresponding to the thermal management system is obtained based on the acquired first flow data of the thermal management system, the second flow data of the coolant at the target heat exchange component in the thermal management system is calculated based on the target physical model; and the local flow model for the coolant at the target heat exchange component is obtained by training the preset model according to the second flow data and the corresponding target characteristic parameter for controlling the operation of the thermal management system. Thus, a local flow model for calculating the local flow of the coolant may be obtained accurately, and further the local flow of the coolant at a target component may be obtained based on the constructed local flow model, which is simple and rapid in calculation, and the obtained local flow of the coolant at the target component is accurate, accuracy and efficiency of the local flow of the coolant at the target component is enhanced.

It should be noted that, the details above and in the following are exemplary and illustrative, and do not constitute the limitation on the present disclosure.

BRIEF DESCRIPTION OF THE DRAWINGS

The drawings herein are incorporated into the description and constitute a part of the description, show embodiments in conformity with the present disclosure, and explain the principle of the present disclosure together with the description, and do not constitute a limitation of the present disclosure.

FIG. 1 is a diagram illustrating a physical model corresponding to a thermal management system involved in embodiments of the disclosure.

FIG. 2 is a flowchart illustrating a method for constructing a local flow model according to embodiments of the present disclosure.

FIG. 3 is a structural diagram illustrating an apparatus for constructing a local flow model according to embodiments of the present disclosure.

FIG. 4 is a structural diagram illustrating an electronic device according to embodiments of the present disclosure.

DETAILED DESCRIPTION

In order to understand the above purpose, features and advantages of the present disclosure more clearly, embodiments of the present disclosure may be further described below. It should be noted that, embodiments of the present disclosure and features in embodiments may be combined without conflict.

Numerous specific details are set forth in the following description to facilitate a thorough understanding of the present disclosure. However, the present disclosure may also be implemented in other different ways than those described herein; obviously, embodiments in the specification are only a part of embodiments of the present disclosure rather than all embodiments.

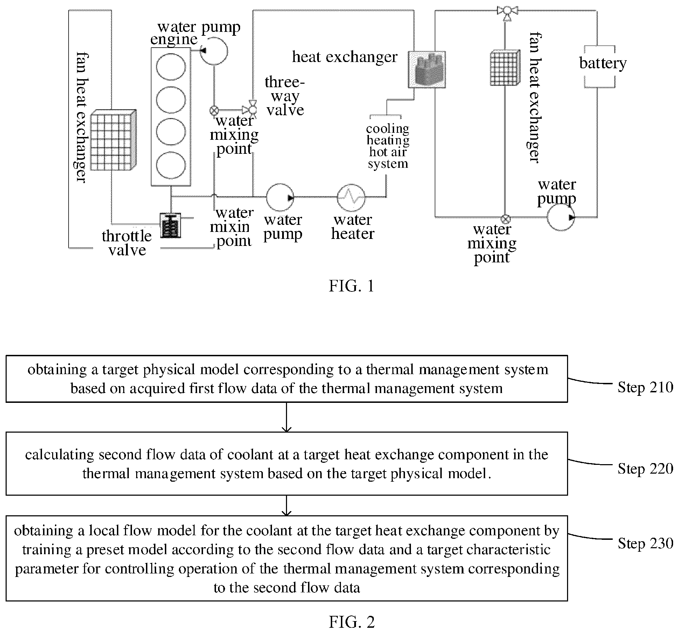

In related art, FIG. 1 illustrates an overall model of a thermal management system of an automobile. As illustrated in FIG. 1, a connection line between heat exchange components (for example, a battery, a fan heat exchanger, an engine, etc. in FIG. 1) in FIG. 1 may be a flow direction of coolant. When determining the flow of the coolant, it is predicted by using an overall model of the thermal management system of the automobile. Such predicted flow of the coolant is an overall flow of the thermal management system (i.e., an overall flow of the coolant in FIG. 1), however, heat exchange components in the thermal management system of the automobile are complicated, a local flow of the coolant corresponding to each of the heat exchange components (for example, may be a flow of coolant between the battery and the fan heat exchanger in FIG. 1) is different from the overall flow of the thermal management system of the automobile. If the overall flow of the thermal management system of the automobile replaces a local flow of coolant corresponding to a certain heat exchange component in the thermal management system of the automobile, it is not accurate enough.

In order to solve the above problem, a method and an apparatus for constructing a local flow model, a device, a medium and a vehicle are provided according to embodiments of the disclosure. The method and the apparatus for constructing the local flow model, the device, the medium and the vehicle obtain a target physical model corresponding to the thermal management system based on acquired first flow data of the thermal management system; calculate second flow data of coolant at a target heat exchange component in the thermal management system based on a target physical model; and obtain a local flow model for the coolant at the target heat exchange component by training a preset model according to the second flow data and a corresponding target characteristic parameter for controlling operation of the thermal management system. Thus, a local flow model for calculating a local flow of the coolant may be obtained accurately, and the local flow of the coolant at a target component may be obtained based on the constructed local flow model, which is simple and rapid in calculation, and the obtained local flow of the coolant at the target component is accurate, accuracy and efficiency of the local flow of the coolant at the target component is enhanced.

The method for constructing the local flow model according to embodiments of the disclosure is illustrated by specific embodiments and application scenarios in combination with attached drawings.

FIG. 2 is a flowchart illustrating a method for constructing a local flow model according to embodiments of the present disclosure. An executive body of the method for constructing the local flow model may be a server. It needs to be noted that, the executive body does not constitute a limitation of the present disclosure.

As illustrated FIG. 2, the method for constructing the local flow model according to embodiments of the present disclosure includes steps 210 to 230.

At step 210, a target physical model corresponding to a thermal management system is obtained based on acquired first flow data of the thermal management system.

At step 220, second flow data of coolant at a target heat exchange component in the thermal management system is calculated based on the target physical model.

At step 230, a local flow model for the coolant at the target heat exchange component is obtained by training a preset model according to the second flow data and a target characteristic parameter for controlling operation of the thermal management system corresponding to the second flow data.

In embodiments of the disclosure, the target physical model corresponding to the thermal management system is obtained based on the acquired first flow data of the thermal management system; the second flow data of the coolant at the target heat exchange component in the thermal management system is calculated based on the target physical model; and the local flow model for the coolant at the target heat exchange component is obtained by training the preset model according to the second flow data and the corresponding target characteristic parameter for controlling the operation of the thermal management system. Thus, the local flow model for calculating the local flow of the coolant may be obtained accurately, and the local flow of the coolant at the target component may be obtained based on the constructed local flow model, which is simple and rapid in calculation, and the obtained local flow of the coolant at the target component is accurate, accuracy and efficiency of the local flow of the coolant at the target component is enhanced.

The method for constructing the local flow model according to embodiments of the present disclosure is specifically introduced below.

At step 210, a target physical model corresponding to a thermal management system is obtained based on acquired first flow data of the thermal management system.

The first flow data may be key flow data of the thermal management system acquired during an experimental process, and specifically may be overall flow data of the thermal management system, or may be local flow data of a certain key heat exchange component (for example, a battery or an engine, etc.) in the thermal management system in FIG. 1.

The target physical model may be a physical model corresponding to the thermal management system model obtained based on acquired the first flow data of the thermal management system.

In some embodiments of the present disclosure, in order to obtain the target physical model accurately, step 210 specifically may include:

constructing a physical model corresponding to the thermal management system based on the acquired first flow data of the thermal management system; and

obtaining the target physical model corresponding to the thermal management system by correcting model parameters of the physical model based on the first flow data.

The physical model may be an overall physical model of the thermal management system as illustrated in FIG. 1.

The model parameters of the physical model may be a water pump pressure rise of the coolant, a pressure drop of a heat exchange environment, a loss of the coolant along a pipe wall used in construction of the physical model.

In some embodiments of the present disclosure, an overall physical model corresponding to the thermal management system, that is, a physical model in FIG. 1, may be constructed based on the acquired first flow data of the thermal management system.

In some embodiments of the present disclosure, how to construct the overall physical model corresponding to the thermal management system belongs to the related art, which will not be repeated here.

Since the model parameters of the physical model of the thermal management system are known in case of a certain piece of corresponding flow data, the target physical model corresponding to the thermal management system may be obtained by correcting the model parameters of the physical model based on the first flow data.

In some embodiments of the disclosure, the model parameters of the physical model may be manually corrected by an engineer or may be automatically corrected in other manners, which is not limited here.

At step 220, second flow data of coolant at a target heat exchange component in the thermal management system is calculated based on the target physical model.

The target heat exchange component may be a heat exchange component at which the flow of the coolant is to be calculated. Specifically, the target heat exchange component may be the battery, the engine, the heat exchanger, etc. in FIG. 1.

The second flow data may be flow data of the coolant at the target heat exchange component calculated based on the target physical model.

In some embodiments of the disclosure, since the flow of the coolant of some heat exchange components cannot be measured in an experimental process, the flow of the coolant at the heat exchange component is important. And an overall physical model (the target physical model) of the thermal management system may simply calculate the flow of the coolant at the heat exchange component. Therefore, the flow data (the second flow data) of the coolant at the target heat exchange component in the thermal management system may be calculated according to the target physical model. For example, a flow of coolant at the engine may be calculated according to a flow of coolant at the battery in FIG. 1.

At step 230, a local flow model for the coolant at the target heat exchange component is obtained by training a preset model according to the second flow data and a corresponding target characteristic parameter for controlling operation of the thermal management system.

The target characteristic parameter may be a characteristic parameter for controlling the operation of the thermal management system. The target characteristic parameter further may be a characteristic parameter obtained after performing a preset processing on the characteristic parameter for controlling the operation of the thermal management system.

The preset model may be a preconfigured model. The local flow model for the coolant at the target heat exchange component may be obtained after the preset model is trained. The preset model may be a neural network model, or may be other model available for predicting the local flow at the target heat exchange component, which will not be limited here.

The target heat exchange component may be a heat exchange component which is to be predicted the local flow, for example, the battery, the water pump in FIG. 1, etc.

The local flow model may be a model for determining the local flow of the coolant at the target heat exchange component.

In some embodiments of the present disclosure, in order to further accurately construct the local flow model for the coolant at the target heat exchange component, before step 230, the method for constructing the local flow model involved may further include:

acquiring a first characteristic parameter for controlling the operation of the thermal management system;
determining at least one associated characteristic parameter associated with the first flow data according to a correspondence between the first characteristic parameter and the first flow data; and
determining the target characteristic parameter according to each associated characteristic parameter.

The first characteristic parameter may be a direct characteristic parameter for controlling the operation of the thermal management system, and for example, may be a rotational speed of a water pump, a temperature, a valve opening, a speed of an engine, a torque of the engine, etc.

The associated characteristic parameter may be a characteristic parameter obtained by expanding the first characteristic parameter according to a correspondence between the first characteristic parameter and the first flow data

In an example, the first characteristic parameter includes the rotational speed of the water pump, the temperature, the valve opening, the speed of the engine and the torque of the engine, and the above first characteristic parameters are respectively expanded to obtain associated characteristic parameters of the rotational speed of the water pump including a square of the rotational speed and a 3rd power of the rotational speed. The temperature is expanded to obtain associated characteristic parameters of the temperature including a square of the temperature, a 3rd power of the temperature and a 4th power of the temperature. The valve opening is expanded to obtain associated characteristic parameters of the valve opening including a square of the valve opening and a 3rd power of the valve opening. The speed and the torque of the engine are expanded to obtain associated characteristic parameters of the speed and the torque of the engine including a product of the speed and the torque of the engine, an integral of the product of the speed and the torque of the engine, etc.

The target characteristic parameter may be a characteristic parameter based on each associated characteristic parameter, and for example, may be a characteristic parameter obtained by performing a preset processing on each associated characteristic parameter.

In embodiments of the disclosure, the first characteristic parameter for controlling the operation of the thermal management system is obtained; the at least one associated characteristic parameter associated with the first flow data is determined according to the correspondence between the first characteristic parameter and the first flow data; and the target characteristic parameter is determined according to each associated characteristic parameter. Therefore, the target characteristic parameter may be accurately determined, and further the local flow model for the coolant at the target heat exchange component may be accurately constructed.

In some embodiments of the present disclosure, in order to obtain the target characteristic parameter accurately, determining the target characteristic parameter according to each associated characteristic parameter may include:

step A, sequentially inputting each associated characteristic parameter into a characteristic screening model respectively, to obtain a predicted flow value corresponding to each associated characteristic parameter, respectively;

step B, for each associated characteristic parameter, calculating a mean square error between a predicted flow value corresponding to each associated characteristic parameter and a low flow value of the coolant in the thermal management system;

Step C, taking an associated characteristic parameter corresponding to a minimum mean square error as a first candidate characteristic parameter;

step D, updating an output of the characteristic screening model to a high flow value of the coolant in the thermal management system, and returning to execute the steps A to C, to obtain a second candidate characteristic parameter; and

step E, taking the first candidate characteristic parameter and the second candidate characteristic parameter as the target characteristic parameter.

The characteristic screening model may be obtained by learning a relationship between each associated characteristic parameter and a flow value of the coolant in the thermal management system.

In some embodiments of the disclosure, the characteristic screening model may be a generalized regression neural network (GRNN) based on a joint probability distribution. An input of the model may be each associated characteristic parameters, and an output of the model may be a flow value of the coolant in the thermal management system.

The predicted flow value may be a flow value corresponding to each associated characteristic parameter predicted based on each associated characteristic parameter by the characteristic screening model after sequentially inputting the associated characteristic parameters into the characteristic screening model, respectively.

The low flow value may be a flow value less than or equal to a first preset flow threshold value. The low flow value may be a lower flow value within a flow range of the coolant.

The first preset flow threshold may be a preset threshold of the low flow value, for example, a flow range of the coolant is between 500-1000, in which case the low flow value may be between 500-700.

The first candidate characteristic parameter may be an associated characteristic parameter corresponding to a minimum mean square error among mean square errors between the calculated predicted flow value corresponding to the associated characteristic parameter and the low flow value of the coolant in the thermal management system.

The high flow value may be a flow value greater than or equal to a second preset flow threshold value. The high flow value may be a higher flow value within a flow range of the coolant.

The second preset flow threshold may be a preset threshold of the high flow value, for example, a flow range of the coolant is between 500-1000, in which case the high flow value may be between 700-1000.

The second candidate characteristic parameter may be an associated characteristic parameter corresponding to a minimum mean square error among mean square errors between the calculated predicted flow value corresponding to each associated characteristic parameter and the high flow value of the coolant in the thermal management system.

In an example, if the associated characteristic parameters have a product of the speed and the torque of the engine, and a square of the rotational speed of the water pump and a 3rd power of the rotational speed of the water pump, all associated characteristic parameters are traversed, that is, the product of the speed and the torque of the engine, and the square of the rotational speed of the water pump and the 3rd power of the rotational speed of the water pump are input into the characteristic screening model, respectively, to obtain a predicted flow value corresponding to the product of the speed and the torque of the engine, a predicted flow value corresponding to the square of the rotational speed of the water pump speed and a predicted flow value corresponding to the 3rd power of the rotational speed of the water pump speed, respectively. If the predicted flow value corresponding to the product of the speed and the torque of the engine is 550, the predicted flow value corresponding to the square of the rotational speed of the water pump is 900, and the predicted flow value corresponding to the 3rd power of the rotational speed of the water pump is 950. If a dependent variable of the characteristic screening model (i.e., a flow standard of the output of the characteristic screening model) is 600, mean square errors between 550 and 600, between 900 and 600, between 950 and 600 are calculated respectively, and through compared, it may obtain that the mean square error between 550 and 600 is minimum, in which case the associated characteristic parameter (the product of the speed and the torque of the engine) corresponding to 550 may be taken as the first candidate characteristic parameter.

Continuing the above example, the output of the characteristic screening model is replaced with the high flow value, for example, may be 850. Then, the product of the speed and the torque of the engine, and the square of the rotational speed of the water pump and the 3rd power of the rotational speed of the water pump are input into the characteristic screening model, respectively, to obtain a predicted flow value corresponding to the product of the speed and the torque of the engine, a predicted flow value corresponding to the square of the rotational speed of the water pump speed and a predicted flow value corresponding to the 3rd power of the rotational speed of the water pump speed respectively. If the predicted flow value corresponding to the product of the speed and the torque of the engine is 550, the predicted flow value corresponding to the square of the rotational speed of the water pump is 900, and the predicted flow value corresponding to the 3rd power of the rotational speed of the water pump is 950. Mean square errors between 550 and 850, between 900 and 850, between 950 and 850 are calculated respectively, and through compared, it may obtain that the mean square error between 900 and 850 is minimum, in which case the associated characteristic parameter (the square of the rotational speed of the water pump) corresponding to 900 may be taken as the second candidate characteristic parameter.

Then, the first candidate characteristic parameter and the second candidate characteristic parameter are taken as target characteristic parameters, that is, the product of the speed and the torque of the engine, and the square of the rotational speed of the water pump are taken as final target characteristic parameters.

In some embodiments of the disclosure, in order to avoid redundancy of the target characteristic parameters for constructing the local flow model of the coolant at the target heat exchange component, after the first candidate characteristic parameter and the second candidate characteristic parameter are obtained, the first candidate characteristic parameter and the second candidate characteristic parameter may be ranked from low to high according to mean square errors between the first candidate characteristic parameter, the second candidate characteristic parameter and the flow value of the coolant in the thermal management system, and first N characteristic parameters ranked first are obtained as the final target characteristic parameters. Thus, precision may be ensured, and characteristic redundancy may be avoided. In an example, first 4 characteristic parameters with a mean square error reduced to 0 are selected as the final target characteristic parameters.

In embodiments of the disclosure, the target characteristic parameter for constructing the local flow model of the coolant at the target heat exchange component may be selected by screening each associated characteristic parameter using the characteristic screening model, thus, an accurate local flow model of the coolant at the target heat exchange component may be obtained.

In some embodiments of the present disclosure, in order to obtain the accurate local flow model of the coolant at the target heat exchange component, step 230 specifically may include:

constructing a training sample according to the second flow data and the corresponding target characteristic parameter for controlling the operation of the thermal management system;

obtaining at least one initial local flow model for the coolant at the target heat exchange component by training the preset model based on the training sample;

acquiring accuracy of each initial local flow model when calculating a local flow of the coolant at the target heat exchange component; and

selecting, based on the accuracy, an initial local flow model with a highest accuracy from the at least one initial local flow model as the local flow model for determining the local flow of the coolant at the target heat exchange component.

The initial local flow model may be a model obtained by training a preset model using a training sample.

In some embodiments of the disclosure, the second flow data acquired at step 230 and the corresponding target feature parameter for controlling the operation of the thermal management system may be randomly divided into a training set and a test set (specifically, may be divided according to ratios of 85% and 15%), then the preset model is trained using the training sample to obtain at least one initial local flow model for determining the local flow of the coolant at the target heat exchange component, and accuracy of the local flow of the coolant at the target heat exchange component predicted by each initial local flow model is calculated using a k test, and the initial local flow model with the highest accuracy is selected from the at least one initial local flow model according to the accuracy, and the selected initial local flow model with the highest accuracy is tested and verified using the test set to obtain a verification result (that is, whether the initial local flow model with the highest accuracy may accurately predict the local flow at the target heat exchange component). If the verification result is good, the initial local flow model with the highest accuracy may be taken as the local training model for determining the local flow of the coolant at the target heat exchange component, so that the more accurate local flow model may be obtained.

In some embodiments of the present disclosure, the at least one initial local flow model obtained for determining the local flow of the coolant at the target heat exchange component may be tested and verified using the test set, and a test result of each initial local flow model is obtained, an accuracy and a test accuracy of the local flow of the coolant at the target heat exchange component predicted by each of the at least one initial local flow mode are calculated using the k test, a local training model for determining the local flow of the coolant at the target heat exchange component is selected based on the accuracy and the test accuracy, and specifically, the local training model for determining the local flow of the coolant at the target heat exchange component may be selected by combining the accuracy and the test accuracy.

In embodiments of the disclosure, the preset model is trained using the training sample to obtain at least one initial local flow model for the coolant at the target heat exchange component, and an accuracy of the local flow of the coolant at the target heat exchange component predicted by each initial local flow model is calculated, and the initial local flow model with the highest accuracy is selected from the at least one initial local flow model according to the accuracy, and taken as the local training model for determining the local flow of the coolant at the target heat exchange component, thus, the more accurate local flow model may be obtained.

In some embodiments, after step 230, the method for constructing the local flow model involved may further include:

> obtaining the local flow of the coolant at the target heat exchange component by inputting the target characteristic parameter into the local flow model; and
> obtaining an outlet water temperature of the coolant after the target heat exchange component exchanges heat with the coolant based on the local flow.

In embodiments of the disclosure, after the local flow model corresponding to the target heat exchange component is constructed, the target characteristic parameter for controlling the operation of the thermal management system may be obtained, then the target characteristic parameter is input into the local flow model to obtain the local flow of the coolant at the target heat exchange component, and the outlet water temperature of the coolant after the target heat exchange component transfers the heat to the coolant may be obtained according to the local flow. Therefore, the outlet water temperature of the coolant after the target heat exchange component transfers the heat to the coolant may be accurately predicted.

In some embodiments of the present disclosure, obtaining the outlet water temperature of the coolant after the target heat exchange component transfers the heat to the coolant based on the local flow specifically may include:

> determining a first heat variation of the coolant after a target heat exchange component with a characteristic length transfers the heat to the coolant based on the local flow and a specific heat of the target heat exchange component;
> obtaining a relational expression of a temperature of the target heat exchange component and an outlet temperature of the coolant by integrating a length of the target heat exchange component according to the first heat variation; and
> obtaining the outlet water temperature of the coolant after the target heat exchange component transfers the heat to the coolant based on the relational expression.

A first heat exchange amount may be a heat exchange amount between the target heat exchange component with the characteristic length and the coolant based on the local flow and the specific heat of the target heat exchange component.

The relational expression of the temperature of the target heat exchange component and the outlet temperature of the coolant may be a relational expression of the temperature of the target heat exchange component and the outlet temperature of the coolant obtained by integrating the length of the target heat exchange component based on the first heat exchange amount.

In some embodiments of the present disclosure, in a steady-state condition, the target heat exchange component causes a change in temperature of the coolant after transferring the heat to the coolant, and a variation in the heat of the coolant (that is, a first heat variation) due to the change in temperature is shown in an equation (1):

$$Q = \dot{m} * C_p * dT_W \qquad\qquad (1)$$

In the equation (1), $\dot{m}$ is a local flow of the coolant; $C_p$ is a constant-pressure specific heat of the coolant; $dT_W$ is a change in temperature of the coolant caused after the target heat exchange component with the characteristic length transfers heat to the coolant; Q is a variation in heat of the coolant (i.e., a first heat variation) due to a change in temperature of the coolant caused after the target heat exchange component with the characteristic length transfers the heat to the coolant.

The relational expression of exchanging between the target heat exchange component and the coolant is as illustrated in an equation (2), the equation (1) and the equation (2) are combined, and the length of the target heat exchange component is integrated to obtain the relational expression between the temperature of the target heat exchange component and the outlet temperature of the coolant as illustrated in an equation (3).

$$Q = \alpha * dA * (T_B - T_w) = \alpha * L_c * dx * (T_B - T_w) \qquad\qquad (2)$$

In the equation (2), $T_B$ is a temperature of the target heat exchange component; $T_w$ is a temperature of the coolant; $\alpha$ is a heat exchange coefficient between the target heat exchange component and the coolant (the coefficient is a constant); $L_c$ is a characteristic length of the target heat exchange component, indicating a corresponding heat exchange area per unit length; $x$ is a length of the target heat exchange component.

$$\frac{T_B - T_{w,\ out}}{T_B - T_{w,in}} = e^{-\frac{\alpha * L_c * dx}{m * C_p}} \qquad (3)$$

In an equation (3), $T_{w,\ out}$ is an outlet water temperature of the coolant, and $T_{w,\ out}$ is an inlet water temperature of the coolant.

The outlet water temperature of the coolant after the target heat exchange component transfers the heat to the coolant may be obtained based on the equation (3).

In embodiments of the disclosure, the outlet water temperature of the coolant after the target heat exchange component transfers the heat to the coolant is solved by the characteristic length of the target heat exchange component. Therefore, a temperature fluctuation of the constructed local flow model when the outlet water temperature is predicted may be avoided, to calibrate the local flow model.

It should be noted that, in the method for constructing the local flow model according to embodiments of the present disclosure, an execution body may be an apparatus for constructing the local flow model, or a control module for executing the method for constructing the local flow model in the apparatus for constructing the local flow model.

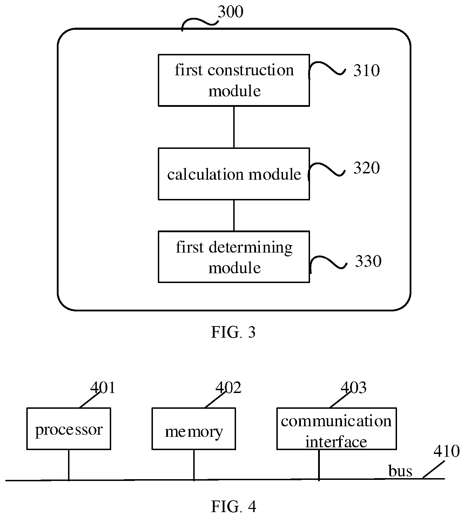

An apparatus for constructing a local flow model is further provided based on the same invention concept of the method for constructing the local flow model. The apparatus for constructing the local flow model according to embodiments of the disclosure is illustrated in combination with FIG. 3.

FIG. 3 is a structural diagram illustrating an apparatus for constructing a local flow model according to an example embodiment.

As illustrated in FIG. 3, an apparatus 300 for constructing the local flow model includes a first construction module 310, a calculation module 330, and a first determining module 330.

The first construction module 310 is configured to obtain a target physical model corresponding to a thermal management system based on acquired first flow data of the thermal management system.

The calculation module 330 is configured to calculate second flow data of coolant at a target heat exchange component in the thermal management system based on the target physical model.

The first determining module 330 is configured to obtain a local flow model for the coolant at the target heat exchange component by training a preset model according to second flow data and a target characteristic parameter for controlling operation of the thermal management system corresponding to the second flow data.

In embodiments of the disclosure, the target physical model corresponding to the thermal management system is obtained by the first construction module based on the acquired first flow data of the thermal management system; the second flow data of the coolant at the target heat exchange component in the thermal management system is calculated by the calculation module based on the target physical model; and the local flow model for the coolant at the target heat exchange component is obtained by the first determining module by training the preset model according to the second flow data and the corresponding target characteristic parameter for controlling the operation of the thermal management system. Therefore, the local flow model for calculating the local flow of the coolant accurately may be obtained, and the local flow of the coolant at the target component may be obtained based on the constructed local flow model, which is simple and rapid in calculation, and the obtained local flow of the coolant at the target component is accurate, accuracy and efficiency of the local flow of the coolant at the target component is enhanced.

In some embodiments of the disclosure, in order to further accurately construct the local flow model for determining the coolant at the target heat exchange component, the apparatus for constructing the local flow model involved may further include a first acquiring module, a third determining module, and a fourth determining module.

The first acquiring module is configured to acquire a first characteristic parameter for controlling the operation of the thermal management system.

The third determining module is configured to determine at least one associated characteristic parameter associated with the first flow data according to a correspondence between the first characteristic parameter and the first flow data.

The fourth determining module is configured to determine the target characteristic parameter according to each associated characteristic parameter.

In some embodiments of the present disclosure, in order to obtain the target characteristic parameter accurately, the fourth determining module is specifically configured to:

step A, sequentially input each associated characteristic parameter into a characteristic screening model respectively, to obtain a predicted flow value corresponding to each associated characteristic parameter, respectively; the characteristic screening model is obtained by learning a relationship between each associated characteristic parameter and a flow value of the coolant in the thermal management system;

step B, for each associated characteristic parameter, calculate a mean square error between the predicted flow value corresponding to each associated characteristic parameter and a low flow value of the coolant in the thermal management system; the low flow value is a flow value less than or equal to a first preset flow threshold value;

Step C, take an associated characteristic parameter corresponding to a minimum mean square error as a first candidate characteristic parameter;

step D, update an output of the characteristic screening model to a high flow value of the coolant in the thermal management system, and returning to execute the steps A to C, to obtain a second candidate characteristic parameter; the high flow value is a flow value greater than or equal to a second preset flow threshold value; and

step E, take the first candidate characteristic parameter and the second candidate characteristic parameter as the target characteristic parameter.

In some embodiments of the present disclosure, in order to obtain the accurate local flow model of the coolant at the target heat exchange component, the second determining module 330 may be specifically configured to:

construct a training sample according to the second flow data and the target characteristic parameter for controlling the operation of the thermal management system corresponding to the second flow data;

obtain at least one initial local flow model for the coolant at the target heat exchange component by training the preset model based on the training sample;

acquire an accuracy of each initial local flow model when calculating a local flow of the coolant at the target heat exchange component; and

select, based on the accuracy, an initial local flow model with a highest accuracy from the at least one initial local flow models as the local flow model for determining the local flow of the coolant at the target heat exchange component.

In some embodiments, the apparatus for constructing the local flow model involved may further include a fifth determining module and a sixth determining module.

The fifth determining module is configured to obtain the local flow of the coolant at the target heat exchange component by inputting the target characteristic parameter into the local flow model.

The sixth determining module is further configured to obtain an outlet water temperature of the coolant after the target heat exchange component exchanges heat with the coolant based on the local flow.

In some embodiments of the present disclosure, the sixth determining module may be specifically configured to:

determine a first heat variation of the coolant after a target heat exchange component with a characteristic length transfers the heat to the coolant based on the local flow and a specific heat of the target heat exchange component;

obtain a relational expression of a temperature of the target heat exchange component and an outlet temperature of the coolant by integrating a length of the target heat exchange component according to the first heat variation; and

obtain the outlet water temperature of the coolant after the target heat exchange component transfers the heat to the coolant based on the relational expression.

The apparatus for constructing the local flow model in embodiments of the disclosure may be configured to perform the method for constructing the local flow model in the method embodiments, and an implementation principle is similar with a technical effect, which will not be repeated here for brevity.

An electronic device is further provided in embodiments of the disclosure based on the same invention concept.

FIG. 4 is a structural diagram illustrating an electronic device according to embodiments of the present disclosure. As illustrated in FIG. 4, the electronic device may include a processor 401 and a memory 402 storing a computer program or instruction.

Specifically, the processor 401 may include a central processing unit (CPU), or an application specific integrated circuit (ASIC), or one or more integrated circuits configured to implement embodiments of the present disclosure.

The memory 402 may include a mass memory for data or instructions. For example, the memory 402 may include a hard disk drive (HDD), a floppy disk drive, a flash memory, an optical disk, a magneto-optical disk, a magnetic tape, or a universal serial bus (USB) drive, or a combination of two or more of the foregoing. The memory 402 may include a removable or non-removable (or fixed) medium, where appropriate. The memory 402 may be inside or outside an integrated gateway disaster recovery device, where appropriate. In a specific embodiment, the memory 402 is a nonvolatile solid-state memory. The memory may include a read only memory image (ROM), a random-access memory (RAM), a magnetic disk storage media device, an optical storage media device, a flash memory device, and a storage device of an electrical, optical or other physical/tangible memory. Thus, in general, the memory includes one or more tangible (non-transitory) computer-readable storage media (e.g., memory devices) encoded with a software including computer-executable instructions, and when the software is executed (e.g., by one or more processors), operations described in the method for constructing the local flow model provided in the above embodiments may be operated.

The processor 401 implements any one method for determining the local flow model in the forgoing embodiments by reading and executing the computer program instruction stored in the memory 402.

In an example, the electronic device may further include a communication interface 403 and a bus 410. As shown in FIG. 4, the processor 401, the memory 402, and the communication interface 403 are connected via the bus 410 and complete intercommunication.

The communication interface 403 is mainly configured to implement communication between each module, device, unit and/or device in embodiments of the present disclosure.

The bus 410 includes a hardware, a software, or a hardware and a software. Components of the electronic device are coupled to each other. For example, the bus may include an accelerated graphics port (AGP) or other graphics bus, an enhanced industry standard architecture (EISA) bus, a front side bus (FSB), a hypertransport (HT) interconnect, an industry standard architecture (ISA) bus, an infiniband interconnect, a low pin count (LPC) bus, a memory bus, a micro channel architecture (MCA) bus, a peripheral component interconnect (PCI) bus, a PCI-Express (PCI-X) bus, a serial advanced technology attachment (SATA) bus, a video electronics standards association local bus (VLB), or other suitable bus, or a combination of two or more of the above. The bus 410 may include one or more buses, where appropriate. Although embodiments of the disclosure have been described and illustrated with respect to a particular bus, any suitable bus or interconnect is considered.

The electronic device may perform the method for constructing the local flow model in embodiments of the disclosure, which further achieves the method for constructing the local flow model described in FIG. 2.

In addition, the method for constructing the local flow model in the above embodiment may be implemented by providing a readable storage medium in embodiments of the present disclosure. The readable storage medium stores a program instruction. When the program instruction is executed by a processor, any one of the methods for constructing the local flow model in the above embodiments is implemented.

In addition, the method for constructing the local flow model in the above embodiment may be implemented by providing a vehicle in embodiments of the present disclosure. The vehicle includes the apparatus for constructing the local flow model, the device for constructing the local flow model, and the computer-readable storage medium in the above embodiments.

It should be understood that the disclosure is not limited to particular configurations and processings described above and shown in the drawings. For the sake of brevity, a description of known methods is omitted here. In the above embodiments, several specific steps are described and shown as examples. However, the method processes of the disclosure are not limited to specific steps described and shown. Those skilled in the art may make various changes, amendments and additions, or change an order between steps, after appreciating the spirit of the present disclosure.

The function block shown in the above structural block diagram may be implemented in a hardware, a software, a firmware, or their combination. When implemented in a manner of the hardware, the function block may be, for example, an electronic circuit, an application-specific integrated circuit (ASIC), a suitable firmware, a plug-in, a function card, etc. When implemented in a manner of the software, elements of the disclosure are programs or code segments for performing required tasks. The programs or code segments may be stored in machine-readable media or transmitted over transmission media or communication links via data signals carried in a carrier. The "machine-readable media" may include any media that may store or transmit information. Examples of the machine-readable media include electronic circuits, semiconductor memory devices, ROMs, flash memories, erasable ROMs (EROMs), floppy disks, CD-ROMs, optical disks, hard disks, fiber optic media, radio frequency (RF) links, etc. The code segments may be downloaded via a computer network such as internet and intranet.

It needs to be noted that example embodiments mentioned in the disclosure describe some methods or systems based on a series of steps or devices. However, the disclosure is not limited to the sequence of the above steps, that is, steps may be performed in the order mentioned in the embodiments, or may be performed in different orders from the sequence in the embodiments, or several steps may be performed simultaneously.

All aspects of the disclosure are described with reference to flowcharts and/or block diagrams of the method, the apparatus (system), and the computer program product according to embodiments of the present disclosure. It should be understood that each box in the flowchart and/or the block diagram, and a combination of boxes in the flowchart and/or the block diagram, may be implemented by computer program instructions. The computer program instructions may be provided to a processor of a general-purpose computer, a dedicated-purpose computer, or other programmable data processing devices to produce a machine such that instructions executed via the processor of the computer or the other programmable data processing devices enable an implementation of functions/actions specified in one or more boxes in the flowchart and/or the block diagram. The processor may be but not limited to the general-purpose processor, the dedicated-purpose computer, a special-purpose processor or a field programmable logic device (FPLA). It may be understood that each box in the flowchart and/or the block diagram, and a combination of boxes in the flowchart and/or the block diagram, may be implemented by a special hardware that performs specified functions or actions, or may be implemented by a combination of a special hardware and a computer instruction.

A computer program product including a computer program is provided according to embodiments of the present disclosure. When the computer program is executed by a processor, the method for constructing the local flow model in any one embodiment of the present disclosure is implemented.

It should be noted that relational terms such as "first" and "second" are used herein to distinguish one entity or operation from another entity or operation without necessarily requiring or implying any such actual relationship or order between such entities or operations. And, the terms "comprising" or any other variations thereof, are intended to cover a non-exclusive inclusion, such that a process, a method, an article or a device including a series of elements not only includes those elements but also includes other elements not expressly listed, or may further include elements inherent to such process, method, article, or device. **In** the absence of more constraints, the elements defined by a sentence "comprising one" do not preclude the presence of additional same elements in the process, method, article, or apparatus that includes the elements.

The above is only an implementation of the disclosure. Those skilled in the art may clearly understand that, a specific working process of the above system, module and unit may refer to a corresponding process in the above method embodiments, which will not be repeated here. It should be understood that, the protection scope of the disclosure is not limited here. Equivalent amendments or replacements that may be easily considered by those skilled in the art shall be contained within the protection scope of the present disclosure.

**Claims**

1.  A method for constructing a local flow model, comprising:

    obtaining a target physical model corresponding to a thermal management system based on acquired first flow data of the thermal management system;
    calculating second flow data of coolant at a target heat exchange component in the thermal management system based on the target physical model; and
    obtaining a local flow model for the coolant at the target heat exchange component by training a preset model according to the second flow data and a target characteristic parameter for controlling operation of the thermal management system corresponding to the second flow data.

2.  The method according to claim 1, wherein before obtaining the local flow model for the coolant at the target heat exchange component by training the preset model according to the second flow data and the target characteristic parameter for controlling the operation of the thermal management system corresponding to the second flow data, the method further comprises:

    acquiring a first characteristic parameter for controlling the operation of the thermal management system;
    determining at least one associated characteristic parameter associated with the first flow data according to a correspondence between the first characteristic parameter and the first flow data; and
    determining the target characteristic parameter according to each associated characteristic parameter.

3.  The method according to claim 2, wherein determining the target characteristic parameter according to each associated characteristic parameter comprises:

    step A, sequentially inputting each associated characteristic parameter into a characteristic screening model respectively, to obtain a predicted flow value corresponding to each associated characteristic parameter, respectively; wherein the characteristic screening model is obtained by learning a relationship between each associated characteristic parameter and a flow value of the coolant in the thermal management system;
    step B, for each associated characteristic parameter, calculating a mean square error between the predicted flow value corresponding to each associated characteristic parameter and a low flow value of the coolant in the thermal management system; wherein the low flow value is a flow value less than or equal to a first preset flow threshold value;
    Step C, taking an associated characteristic parameter corresponding to a minimum mean square error as a first candidate characteristic parameter;
    step D, updating an output of the characteristic screening model to a high flow value of the coolant in the thermal management system, and returning to execute the steps A to C, to obtain a second candidate characteristic parameter; wherein the high flow value is a flow value greater than or equal to a second preset flow threshold value; and
    step E, taking the first candidate characteristic parameter and the second candidate characteristic parameter as the target characteristic parameter.

4. The method according to any one of claims 1 to 3, wherein obtaining the local flow model for the coolant at the target heat exchange component by training the preset model according to the second flow data and the target characteristic parameter for controlling the operation of the thermal management system corresponding to the second flow data comprises:

constructing a training sample according to the second flow data and the target characteristic parameter for controlling the operation of the thermal management system corresponding to the second flow data;
obtaining at least one initial local flow model for the coolant at the target heat exchange component by training the preset model based on the training sample;
acquiring an accuracy of each initial local flow model when calculating a local flow of the coolant at the target heat exchange component; and
selecting, based on the accuracy, an initial local flow model with a highest accuracy from the at least one initial local flow models as the local flow model for determining the local flow of the coolant at the target heat exchange component.

5. The method according to claim 4, wherein after obtaining the local flow model for determining the local flow of the coolant at the target heat exchange component, the method further comprises:

obtaining the local flow of the coolant at the target heat exchange component by inputting the target characteristic parameter into the local flow model; and
obtaining an outlet water temperature of the coolant after the target heat exchange component exchanges heat with the coolant based on the local flow.

6. The method according to claim 5, wherein obtaining the outlet water temperature of the coolant after the target heat exchange component exchanges the heat with the coolant based on the local flow comprises:

determining a first heat variation of the coolant after a target heat exchange component with a characteristic length transfers the heat to the coolant based on the local flow and a specific heat of the target heat exchange component;
obtaining a relational expression of a temperature of the target heat exchange component and an outlet temperature of the coolant by integrating a length of the target heat exchange component according to the first heat variation; and
obtaining the outlet water temperature of the coolant after the target heat exchange component transfers the heat to the coolant based on the relational expression.

7. An apparatus for constructing a local flow model, comprising:

a first construction module, configured to obtain a target physical model corresponding to a thermal management system based on acquired first flow data of the thermal management system;
a calculation module, configured to calculate second flow data of coolant at a target heat exchange component in the thermal management system based on the target physical model; and
a first determining module, configured to obtain a local flow model for the coolant at the target heat exchange component by training a preset model according to the second flow data and a target characteristic parameter for controlling operation of the thermal management system corresponding to the second flow data.

8. A device for constructing a local flow model, comprising a processor and a memory storing a computer program instruction, wherein when the computer program instruction is executed by the processor, the method for constructing the local flow model according to any one of claims 1 to 6 is implemented.

9. A computer-readable storage medium storing a computer program instruction, wherein when the computer program instruction is executed by a processor, the method for constructing the local flow model according to any one of claims 1 to 6 is implemented.

10. A vehicle, comprising at least one of:

the apparatus for constructing the local flow model according to claim 7;
the device for constructing the local flow model according to claim 8; or
the computer-readable storage medium according to claim 9.

**11.** A computer program product comprising a computer program, wherein when the computer program is executed by a processor, the method for constructing the local flow model according to any one of claims 1 to 6 is implemented.

FIG. 1

obtaining a target physical model corresponding to a thermal management system based on acquired first flow data of the thermal management system — Step 210

calculating second flow data of coolant at a target heat exchange component in the thermal management system based on the target physical model. — Step 220

obtaining a local flow model for the coolant at the target heat exchange component by training a preset model according to the second flow data and a target characteristic parameter for controlling operation of the thermal management system corresponding to the second flow data — Step 230

FIG. 2

300

first construction
module ~ 310

calculation module ~ 320

first determining
module ~ 330

FIG. 3

401 402 403

processor | memory | communication
interface

410

bus

FIG. 4

**INTERNATIONAL SEARCH REPORT**

| International application No. |
|---|
| **PCT/CN2023/101130** |

**A. CLASSIFICATION OF SUBJECT MATTER**

G06F 30/17(2020.01)i

According to International Patent Classification (IPC) or to both national classification and IPC

**B. FIELDS SEARCHED**

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

VEN, CNABS, CNTXT, WOTXT, CNKI, IEEE: 北京罗克维尔斯科技有限公司, 车辆, 汽车, 热管理, 冷却, 流量, 局部, 模型, 精确, 训练, vehicles, automobiles, thermal management, cooling, flow, local, model, precision, training

**C. DOCUMENTS CONSIDERED TO BE RELEVANT**

| Category* | Citation of document, with indication, where appropriate, of the relevant passages | Relevant to claim No. |
|---|---|---|
| X | CN 111814261 A (WEICHAI POWER CO., LTD.) 23 October 2020 (2020-10-23) description, paragraphs 77-152, and figures 2-4 | 1-2, 4-11 |
| A | CN 114154689 A (CENTRAL SOUTH UNIVERSITY) 08 March 2022 (2022-03-08) entire document | 1-11 |
| A | CN 114239133 A (CHINA AUTOMOTIVE (CHANGZHOU) ENGINEERING RESEARCH INSTITUTE CO., LTD.) 25 March 2022 (2022-03-25) entire document | 1-11 |
| A | DE 102016007320 A1 (DAIMLER AG) 21 December 2017 (2017-12-21) entire document | 1-11 |
| A | US 2018004864 A1 (INTERNATIONAL BUSINESS MACHINES CORP.) 04 January 2018 (2018-01-04) entire document | 1-11 |

☐ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 September 2023** | **21 September 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/101130**

| Patent document cited in search report | | | Publication date (day/month/year) | Patent family member(s) | | | Publication date (day/month/year) |
|---|---|---|---|---|---|---|---|
| CN | 111814261 | A | 23 October 2020 | None | | | |
| CN | 114154689 | A | 08 March 2022 | None | | | |
| CN | 114239133 | A | 25 March 2022 | None | | | |
| DE | 102016007320 | A1 | 21 December 2017 | None | | | |
| US | 2018004864 | A1 | 04 January 2018 | US | 10423735 | B2 | 24 September 2019 |
| | | | | US | 2019392096 | A1 | 26 December 2019 |
| | | | | US | 11068628 | B2 | 20 July 2021 |

Form PCT/ISA/210 (patent family annex) (July 2022)